Europäisches Patentamt

European Patent Office

Office européen des brevets

(11) Publication number: **0 411 791 A1**

# EUROPEAN PATENT APPLICATION

(21) Application number: **90307921.8**

(51) Int. Cl.5: **C08G 69/26, B32B 27/34**

(22) Date of filing: **19.07.90**

(30) Priority: **03.08.89 GB 8917752**

(43) Date of publication of application:
**06.02.91 Bulletin 91/06**

(84) Designated Contracting States:
**AT BE CH DE DK ES FR GB GR IT LI LU NL SE**

(71) Applicant: **BP Chemicals Limited**
**Belgrave House 76 Buckingham Palace Road**
**London, SW1W 0SU(GB)**

(72) Inventor: **Dolden, John Groves**
**The Britisch Petroleum Co. p.l.c., Chertsey**

Road
Sunbury-on-Thames, Middlesex, TS16
7LN(GB)
Inventor: **Studholme, Matthew Benjamin**
**BP Chemicals Limited, Grangemouth**
**Stirlingshire, FK3 9XH(GB)**

(74) Representative: **Krishnan, Suryanarayana**
**Kalyana et al**
**BP INTERNATIONAL LIMITED Patents &**
**Agreements Division Chertsey Roadoad**
**Sunbury-on-Thames Middlesex TW16**
**7LN(GB)**

(54) **Barrier polymers.**

(57) The present invention relates to gas barriers comprising at least one layer of an amorphous polyamide derivable from a nylon salt formed from aromatic dicarboxylic acids and diamines characterised in that
a) the aromatic dicarboxylic acids comprise isophthalic acid and at least one other aromatic dicarboxylic acid selected from terephthalic acid, 4,4'-dicarboxy biphenyl and 2,6-naphthalene dicarboxylic acid, and
b) the diamine comprises meta-xylylene diamine, the polyamide being a barrier against oxygen and/or carbon dioxide.

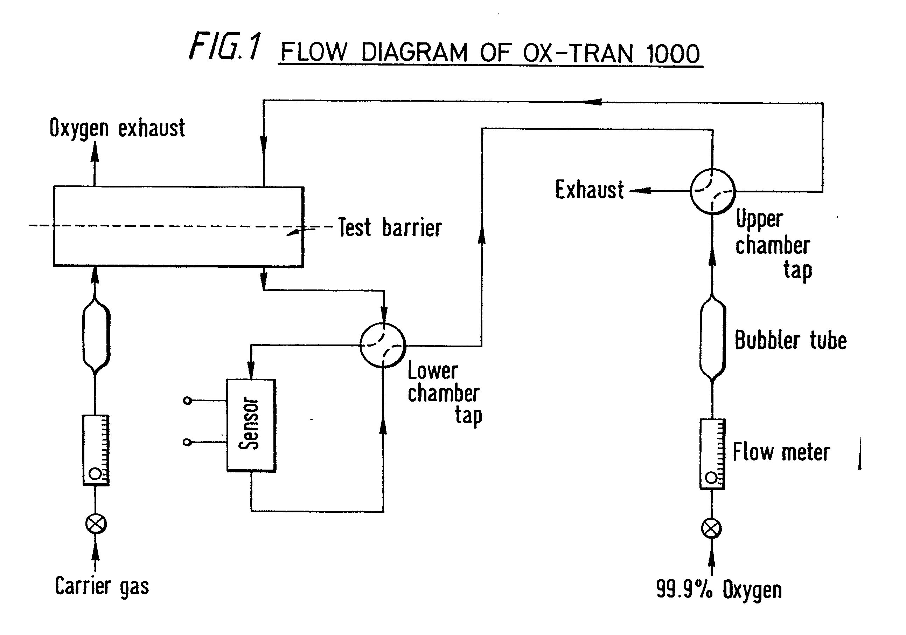

*FIG.1* FLOW DIAGRAM OF OX-TRAN 1000

# BARRIER POLYMERS

This invention relates to amorphous polyamide barrier polymers and especially amorphous polyamide barrier polymers.

Barrier polymers are used in packaging containers made to protect their contents from the environment over the normal shelf life of the product. Many products, including foods, are sensitive to oxygen, which can cause flavour changes or discolouration. The ingress of moisture, if allowed, could cause dry soluble powders to cake, or a loss of moisture may adversely affect the viscosity of water-based liquids or semifluids. For carbonated beverages, both the retention of carbon dioxide and protection from oxygen are important. Some containers are also required to resist oil or serve as a barrier to volatile organics.

In competition with glass and metal containers, conventional polymers such as polyolefins and nylons have been used for packaging. Their light weight, shatter resistance (as opposed to glass), ease of disposal by incineration, and lower cost (in most cases) are the advantages they confer. However, these conventional polymers, although providing fairly good resistance to moisture, are quite permeable to oxygen and organic vapours. The barrier polymers are used to overcome this defect.

The barrier polymers mainly used hitherto are ethylene-vinyl alcohol copolymers (EVOH, typically EVAL-E or F, Regd. Trade Mark), vinylidene chloride copolymers (VDC, typically, Saran, Regd. Trade Mark), nitrile polymers (NP, typically Barex, Regd. Trade Mark) and amorphous polyamides (AP, typically Selar, Regd. Trade Mark).

It has now been found that polyamides produced from an aromatic dicarboxylic acid and one or more diamines can give rise to polyamides which have particularly desirable barrier properties.

Accordingly, the present invention relates to gas barriers comprising at least one layer of an amorphous polyamide derivable from a nylon salt formed from aromatic dicarboxylic acids and diamines characterised in that

a) the aromatic dicarboxylic acids comprise isophthalic acid and at least one other aromatic dicarboxylic acid selected from terephthalic acid, 4,4′-dicarboxy biphenyl and 2,6-naphthalene dicarboxylic acid, and

b) the diamine comprises meta-xylylene diamine, the polyamide being a barrier against oxygen and/or carbon dioxide.

The nylon salt from which the polyamide is derivable may contain upto 50 mole% of isophthalic acid and up to 90 mole% of the other aromatic dicarboxylic acid provided the total acid component is made upto 100 mole% with respect to the diamine component therein.

Similarly, the amount of meta-xylylene diamine in the diamine component is at least 25 mole% and can be up to 100 mole%. However, some of the amine component may be replaced by other amines such as hexamethylene diamine or para-xylylene diamine.

Whatever the dicarboxylic acid and diamine combination used to produce the nylon salt, it should result in a melt processible amorphous polyamide. By 'melt processible' is meant that the amorphous polyamide formed should be capable of being injection moulded, blow moulded, extruded, calendered or blown into films. In this context it is worth noting that as the meta-xylylene diamine content of the formulation to produce the polyamide is increased, the isophathalic acid content should also be increased in order to maintain the melt processibility of the polyamide formed.

Specific examples of amorphous polyamides which can be used as gas barriers according to the present invention are polyamides derivable from a nylon salt having one of the following formulations in moles %:

a) isophthalic acid/terephthalic acid/metaxylylene diamine (50/50/100),

b) isophthalic acid/terphthalic acid/hexamethylene diamine/metaxylylene diamine (50/50/50/50) and

c) isophthalic acid/terephthalic acid/hexamethylene diamine/metaxylylene diamine (50/50/30/70)

The nylon salt for instance can be prepared by mixing an equimolar proportion of the diacid and diamine in water and heating to form an aqueous solution.

Prior to heating the salt concentrations can be modified to give equimolar amounts of each component by adjustment of solution pH. The solution so formed can be decolourised over e.g. activated charcoal. The resultant purified solution can then be cooled to precipitate the nylon salt.

The nylon salt can be polymerised to a higher molecular weight polyamide by charging the salt into a reactor and heating the contents optionally in the presence of a catalyst.

To accelerate the rate of polycondensation, a catalyst or mixture of catalysts can be added to the nylon salt feedstock prior to feeding thereof into the polycondensation reactor. Typical catalysts include polyphosphoric acid, ammonium hypophosphite, metal hypophosphites and the like. In the present process, the preferred catalyst is ammonium hypophosphite blended into the salt at a level of 0.025 - 1.05% by weight, preferably at a level of 0.1% by weight. Optionally, a second catalyst may be added, providing additional benefits in terms of colour stability. This second catalyst, added in addition to ammonium hypophosphite, is preferably sodium hypophosphite added at a level of between 0.1 and 1.0% by weight and specifically 0.5%.

At elevated temperatures e.g. 200-350°C, polymerisation occurs and upon cooling the desired polyamide of high molecular weight is formed. The reaction mixture is cooled and the polyamide collected and sent for further processing. ·

The polyamides used as gas barrier materials in the present invention suitably have

a) a number average molecular weight in the range 15,000 to 40,000, preferably 25,000 to 35,000,

b) an inherent viscosity in the range 1.0 to 2.0 dlg$^{-1}$,

c) a glass transition temperature in the range 120°C to 210°C, and

d) oxygen gas permeability at 100% relative humidity (RH) in the range from 0.1 x 10$^{-13}$ to 20 x 10$^{-13}$cm$^3$(STP)cm/cm$^2$scmHg.

The barrier polyamides thus formed could be used in both flexible and rigid packaging where the ingress of oxygen into the packaging, resulting in deterioration of the product packaged, is undesirable. Examples of products where oxygen exposure is undesirable include foodstuffs and many chemicals. In addition it is expected that the polyamides will also have good resistance to carbon dioxide permeation hence they would be a good packaging material for carbonated beverages where both the retention of carbon dioxide and protection from oxygen ingress are important.

The polyamides are readily mouldable into many different forms which include bottles, drums, trays, boxes, films and pipes. The products can be produced on conventional extrusion and injection equipment designed to process nylon or polyolefin resins. Processes that can be used include blown film, cast film, sheet and blow moulding, injection moulding and extrusion. The polyamide can either be used as a monolayer or as multilayer structure (e.g. of upto 9 layers) of the polyethylene terephthalate (PET)-/polyamide/(PET) type although other layers such as, for example, polyethylene, polypropylene, polystyrene, polyvinyl chloride, ethylene-vinyl acetate copolymer, polybutylene terephthalate or even conventional semi-crystalline nylons such as nylon-6 and nylon-6,6 can also be used in combination with polyamides of the present invention. Adhesive or tie layers may be required between the polymer layers to form a cohesive multilayer structure.

Using multilayer composites can have advantages over monolayer composites. For example, it is possible to calculate the minimum thickness of the barrier resin required for protection of the product to be packaged against oxygen. However, this calculated thickness may be too thin to give the container the necessary mechanical strength. Use of cheaper outer layers can give the container the necessary mechnical strength whilst keeping the cost of the package down. The outer layers may also give other advantages over monolayers. For example, if polyethylene is used then lower water vapour transmission rates will be experienced.

The main advantage of the barrier polyamides of the present invention over existing barrier resins is the improvement in resistance to oxygen permeation with increasing humidity so that as 100% relative humidity (RH) is approached, the present polyamides have permeability co-efficients which are significantly lower than and, in some cases, the lowest of all the existing commercial barrier resins known. The present polyamides are also naturally transparent due to their amophorus structure and have excellent optical properties. High temperature resistance and toughness are additional advantages.

The present invention is further illustrated with reference to the following Examples:

## Examples

All the examples given below utilised similar preparative techniques which are detailed below:

## Abbreviations used:

IPA : isophthalic acid
TPA : terephthalic acid
HMD : hexamethylene diamine
MXD : m-xylylene diamine
AHP : ammonium hypophosphite (catalyst)
BA : benzoic acid (chain stopper)

IV : inherent viscosity
OTR : oxygen transmission rate
IPA/HMD nylon salt : hexamethylene diammonium isophthalate
TPA/HMD nylon salt : hexamethylene diammonium terephthalate
IPA/MXD nylon salt : m-xylylene diammonium isophthalate
TPA/MXD nylon salt : m-xylylene diammonium terephthalate

Raw Materials used:

isophthalic acid ex Amoco Chemicals, IPA-220 grade terephthalic acid (polymerisation grade) ex ICI, hexamethylene diamine (60% w/w aqueous solution) ex ICI
m-xylylene diamine (99%) ex Akzo Chemie
AHP ex Ubichem Ltd
BA (Gold Label) ex Aldrich Chemicals,
Activated carbon SX Plus ex Norit UK Ltd.
All chemicals were used as received with no further purification.

Preparation of Nylon Salt

Diacid and diamine were dissolved in distilled water in equimolar quantities at 95°C. A saturated solution at this temperature was prepared for all nylon salts except for the preparation of IPA/HMD and IPA/MXD salts where concentrations of 125% w/w and 30% w/w were used respectively. The solution pH was adjusted to the stoichiometric pH; then the solution was decolourised using SX-Plus activated carbon until the difference in % transmission between solution and distilled water measured at 480nm was less than 0.5%. The solution was then cooled to 25°C and the salt precipitated using propan-2-ol, (99%, ex BDH Ltd). The salt was then filtered, washed with fresh propan-2-ol and dried under vacuum at 65°C to <0.5% wt moisture.

General Polymerisation Procedure

All polycondensations were carried out in 500ml 3-necked round-bottomed flasks. A Techne SBL-1 fluidised sandbath was used to heat the reaction flask and the temperature of the reaction charge was monitored using a NiCr/NiAl thermocouple. A fractionating column was attached to the reaction flask to allow the removal of water from the reaction flask whilst minimising diamine losses. An overhead mechanically-powered agitator was used to stir the reaction mixture.

The nylon salts (produced as described above) were first charged to the reaction flask along with the other ingredients. A small quantity of excess diamine (0.5 mol%) was added to the reaction charge to compensate the diamine losses which occur during the polymerisation so that stoichiometry was maintained throughout. The reaction charge was initially heated to 130°C during which the bulk of the water was removed. The temperature was maintained at 130°C for 1 hour. The reaction temperature was then raised to 275°C over a period of 2 hours. Polymerisation was carried out at 275°C for a total of 3 hours.

A nitrogen blanket (white spot) was maintained over the reaction mixture during the heating and until the product had cooled to 25°C.

Inherent viscosities (IV's) were measured by initially dissolving 0.15g of the polymer in 100ml of 98.0% sulphuric acid (BDH Ltd, England, AnalaR grade) overnight and the solution flow time was measured in BS/U ASTM D445 type D viscometers suspended in a viscometer bath controlled at 25 $^+/_-$ 0.01°C. The inherent viscosity is calculated from $IV[\log_e(t/t_o)]/C$ where C = concentration in $gdl^{-1}$, t = solution flowtime in seconds and $t_o$ = solvent flowtime in seconds. No corrections were made for kinetic energy or end effects.

Glass transition temperatures (tg's) were measured by differential scanning calorimetry (DSC). The DSC used was manufactured by Mettler, model DSC30 coupled to a TC10A processor (also ex Mettler). A heating rate of 10°C $min^{-1}$ was used with a nitrogen purge rate through the DSC cell of 50cm$^3$ $min^{-1}$. A 5mg sample size was used.

Oxygen Permeability Testing

All oxygen permeability co-efficients were measured using OX-TRAN 1000 oxygen transmission rate test apparatus as manufactured by Modern Controls Inc., Minneapolis, USA. The measurements were carried out in accordance with ASTM test method D-3985-81, which was designed around the OX-TRAN equipment, except for two operating parameters. Firstly a test temperature of 25°C was used instead of the stipulated 23°C in the method. Secondly in addition to measurements at 0% relative humidity as specified in the test method, permeability co-efficients close to 100% relative humidity were also measured. The relative humidity was maintained at close to 100% by bubbling the test gates through bubbler tubes filled with glass beads and water. All other operating parameters and procedures were as specified in D-3985-81 (ASTM).

All films were prepared from the polyamide in pellet form for stesting by compression moulding at 270°C using a 25-ton hydraulic press manufactured by George E. Moore and Son Ltd. The pellets were pressed between mirror finished nickel electroplated steel sheets using a suitable release agent preferably Frekote 700 (ex Hysol, A and IP Division) to within the thickness range 100-300 micrometers and if uniform thickness across the sheet $^+/_-$ 10 micrometers.

A schematic representation of the test apparatus used is given in the accompanying Figure 1. A brief description of the test procedure as detailed in ASTM D-3982-81 is as follows. 10cm x 10cm test films were clamped into special 50cm$^2$ diffusion cells. Both sides of the film were initially purged with an oxygen-free carrier gas preferably 98% nitrogen with 2% hydrogen although the accuracy of the mixture was not critical. This was done to remove residual oxygen from the sample. When a stable zero had been established, oxygen (99.9% purity) was then introduced into the upper half of the diffusion cell. Carrier gas continued to flow through the lower half of the cell carrying any oxygen which had diffused through the film to a coulometric detector. The test was continued until a stable equilibrium oxygen transmission rate value was reached. Each sample was tested in duplicate.

Example 1

Monomer formulation: IPA/TPA/MXD
= 50/ 50/100 mol %

| Reaction charge: | IPA/MXD nylon salt | 60.4g |
| | TPA/MXD nylon salt | 60.4g |
| | AHP | 0.12g; 0.1 % wt |
| | BA | 0.24g; 0.5 mol % |
| | water | 100ml |

The product formed was water-white with an IV = 1.34 dlg$^{-1}$
OTR at 0% RH : 1.3 x 10$^{-13}$cm$^3$ (STP)cm/cm$^2$scmHg
OTR at 100% RH : 0.3 c 10$^{-13}$cm$^3$ (STP)cm/cm$^2$scmHg

Example 2

Monomer formulation: IPA/TPA/HMD/MXD
= 50/ 50/ 50/ 50 mol %

| Reaction charge: | TPA/HMD nylon salt | 56.4g |
| | IPA/MXD nylon salt | 60.4g |
| water: 100 ml | AHP | 0.12g; 0.1 % wt |
| | BA | 0.24 g; 0.5 mol % |

An amorphous, water-white polymer with tg = 166°C and
IV = 1.64 dlg$^{-1}$ was produced

EP 0 411 791 A1

OTR at 0%RH : 17 x $10^{-13}$cm³ (STP)cm/cm²scmHg
OTR at 100%RH : 5.5 x $10^{-13}$cm³ (STP)cm/cm²scmHg

Example 3

Monomer formulation: IPA/TPA/HMD/MXD
= 50/ 50/ 30/ 70 mol %

| Reaction charge: | TPA/HMD nylon salt | 33.84g |
| --- | --- | --- |
| | IPA/MXD nylon salt | 60.4g |
| | TPA/MXD nylon salt | 24.16g |
| | AHP | 0.12g; 0.1 % wt |
| | BA | 0.24g; 0.5 mol % |
| | water | 100ml |

The product formed was water-white, amorphous with a tg = 178° C and an IV = 1.29 dlg⁻¹
OTR at 0%RH : 3.1 x $10^{-13}$cm³ (STP)cm/cm²scmHg
OTR at 100%RH : 2.5 x $10^{-13}$cm³ (STP)cm/cm²scmHg

Table 1

| Comparison of OTR's with commercially available barrier resins | | | | | |
| --- | --- | --- | --- | --- | --- |
| | Comp. Test | Resins | | Relative Humidity | |
| | | | | 0% | ca.100% |
| Comparative | A | Eval-F (HIBAR*FILM, ex Dow 23% F) | | 0.08 | 5.1 |
| Data | B | MXD-6 (NYREF* 6001, ex SOLVAY) | | 0.5 | 0.9 |
| on | C | PVDC (SARAN* X05253.25, ex Dow) | | - | 0.68 |
| known | D | Nitrile Plastic (BAREX* 210 ex BP America) | | 4.1 | 4.4 |
| art | E | Polyamide (TROGAMID* T, ex Chemische Warke Hüls A | | 54 | 20 |
| resins. | F | Polyamide (SELAR* PA3426, ex DU PONT) | | 18.7 | 6.1 |
| Polyamides | Example | | | | |
| of the | 1 | IPA/TPA/MXD (50/50/100mol%) | | 1.3 | 0.3 |
| present | 2 | IPA/TPA/HMD/MXD (50/50/50/50mol%) | | 17 | 5.5 |
| invention | 3 | IPA/TPA/HMD/MXD (50/50/30/70mol%) | | 3.1 | 2.5 |

*Regd. Trade Mark.
Units: $10^{-13}$cm³ (STP) cm/cm²schHg
All resins measured using modified test ASTM D-3985-81 as described in the text.

## Claims

1. Gas barriers comprising at least one layer of an amorphous polyamide derivable from a nylon salt formed from aromatic dicarboxylic acids and diamines characterised in that
   a) the aromatic dicarboxylic acids comprise isophthalic acid and at least one other aromatic dicarboxylic acid selected from terephthalic acid, 4,4'-dicarboxy biphenyl and 2,6-naphthalene dicarboxylic acid, and
   b) the diamine comprises meta-xylylene diamine, the polyamide being a barrier against any substantial diffusion of oxygen and/or carbon dioxide therethrough.
2. Gas barriers according to Claim 1 characterised in that
   a) the dicarboxylic acid has upto 50 mole% of isophthalic acid and upto 90 mole% of at least one other

6

aromatic dicarboxylic acid provided that the total acid component is made upto 100 mole% with respect to the diamine component and

b) the diamine has at least 25 mole% and upto 100 mole% of metaxylylene diamine, some of the amine being optionally replaced by a diamine selected from hexamethylene diamine and para-xylylene diamine.

3. Gas barriers to Claim 1 or 2 wherein the polyamide is derivable from a nylon salt having one of the following formulations in moles

a) isophthalic acid/terephthalic acid/metaxylylene diamine (50/50/100),

b) isophthalic acid/terephthalic acid/hexamethylene diamine/meta-xylylene diamine (50/50/50/50) and

c) isophthalic acid/terephthalic acid/hexamethylene diamine/metaxylylene diamine (50/50/30/70).

4. Gas barriers according to any one of the preceding Claims characterised in that the amorphous polyamide has

a) a number average molecular weight from 15,000 to 40,000,

b) an inherent viscosity in the range of 1.0 to 2.0 dl/g,

c) a glass transition temperature in the range from 120 to 210°C and

d) an oxygen permeability at 100% relative humidity in the range of $0.1 \times 10^{-13}$ to $20 \times 10^{-13}$ cm$^3$ (STP)-cm/cm$^2$ scmHg.

FIG.1 FLOW DIAGRAM OF OX-TRAN 1000

Oxygen exhaust

Test barrier

Sensor

Lower chamber tap

Carrier gas

Exhaust

Upper chamber tap

Bubbler tube

Flow meter

99.9% Oxygen

EP 0 411 791 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 318 964 (MITSUBISHI) --- | | C 08 G 69/26 |
| A | EP-A-0 288 972 (MITSUBISHI) --- | | B 32 B 27/34 |
| A | CHEMICAL ABSTRACTS, vol. 110, no. 22, 29th May 1989, page 71, abstract no. 194407w, Columbus, Ohio, US; & JP-A-01 06 056 (MITSUBISHI KASEI CORP.) 10-01-1989 ------ | | |

|  |  |
|---|---|
| | TECHNICAL FIELDS SEARCHED (Int. Cl.5) |
| | C 08 G |
| | B 32 B |

The present search report has been drawn up for all claims

| Place of search | Date of completion of the search | Examiner |
|---|---|---|
| THE HAGUE | 09-10-1990 | LEROY ALAIN |